# EUROPEAN PATENT SPECIFICATION

(11) **EP 0 587 066 B1**
(45) Date of publication and mention of the grant of the patent: **12.05.1999**
(21) Application number: 93114152.7
(22) Date of filing: 03.09.1993
(51) Int. Cl.: H04B 10/10

(54) **Optical-electronic system for the intercommunication of commands among electrical devices**
Optoelektronisches System zur Übermittlung von Befehlen zwischen elektrischen Einrichtungen
Système opto-électronique d'intercommunication de commandes entre des appareils électriques

(30) Priority: 08.09.1992 IT MI922081
(43) Date of publication of application: 16.03.1994
(73) Proprietor: Pavesi, Angelo, 20137 Milan (IT)
(72) Inventor: Pavesi, Angelo, 20137 Milan (IT)
(74) Representative: Modiano, Guido, Dr.-Ing.

(56) References cited:
- EP-A- 0 334 254
- GB-A- 2 168 214
- US-A- 4 104 533
- IBM TECHNICAL DISCLOSURE BULLETIN. vol. 18, no. 7 , December 1975 , NEW YORK US page 2187 H.E.KORTH 'Optical Multichannel Connection of Integrated Modules'
- 1986 PROCEEDINGS OF FALL JOINT COMPUTER CONFERENCE 2 November 1986 , DALLAS,TEXAS,US pages 464 - 478 D.H.HARTMAN 'Optical Interconnection Technology in the Telecommunications Network'
- IBM TECHNICAL DISCLOSURE BULLETIN. vol. 16, no. 11 , April 1974 , NEW YORK US pages 3523 - 3524 R.C.CLAPPER ET AL 'Optical Data Coupler'

## Description

The present invention relates to a system for transmitting electrical signals which is suitable to be used particularly in electrical devices used in electrical panels for the distribution and control of electric power. Electrical devices used to control and distribute electric power currently provide for three types of connection: 1) connection to the electric power supply line; 2) connection to the load to be supplied with power; 3) connection among the various devices and/or to actuation and/or control elements which can be included in the same panel or be provided externally. This last type relates to electrical connections which are commonly termed "command" or "logic" connections, which must be produced by means of known electric wiring systems.

Since the other two types of connection mentioned above require wiring materials and techniques suitable for heavy currents, the personnel assigned to these activities uses these techniques and materials also to provide the "command" or "logic" connections, although the nature of the electrical signals which flow through these connections does not require the use of these materials but would require materials which are enormously undersized both in terms of required copper cross-sections and in terms of electrical insulation. As electrical devices for the distribution and control of electric power have evolved, control and interconnection circuits have progressively increased; due to the above mentioned reasons, these circuits are formed with expensive and oversized materials, with a considerable expenditure of time to produce the connections and with considerable space occupation within the electrical panels.

The aim of the present invention is to provide users with a system which allows fully to avoid execution of the above described wiring, obviating the above mentioned difficulties by means of a solution which is easy and economical to produce and virtually eliminates the need to physically produce "logic" connections, the waste of expensive accessories and material, and the waste of space inside the electrical panels and the wiring raceways. This technical problem, ie that of exchanging data amongst modules of a system which is not a telecommunication system in the first place has already been dealt with in a number of cases in the prior art by establishing a wireless optical data link amongst the various units of the system. Reference is made in this respect to: IBM Technical Disclosure Bulletin, vol. 18, no 7, Dec. 1975, New York, page 2187; 1986 Proceedings of Fall Joint computer Conference 2 November 1986, Dallas, Texas, US, pages 464-478; GB-A-2 168 214.

The present invention provides a system according to claim 1, which comprises an optical transmission system and an optical reception system which are characterized in that they are tuned to the same frequency as the generated and detected radiation; advantageously, the optical transmitter is constituted by a solid-state lamp and by the electronic circuit associated therewith, whereas the receiver consists of a solid-state sensor and of the electronic circuit associated therewith, a transmitter and a receiver being advantageously arranged at the opposite sides of each device to be controlled so as to form a chain between the control device and the controlled devices.

Further characteristics and advantages of the invention will become apparent from a preferred but not exclusive embodiment of the system, illustrated only by way of non-limitative example in the accompanying drawings, wherein:

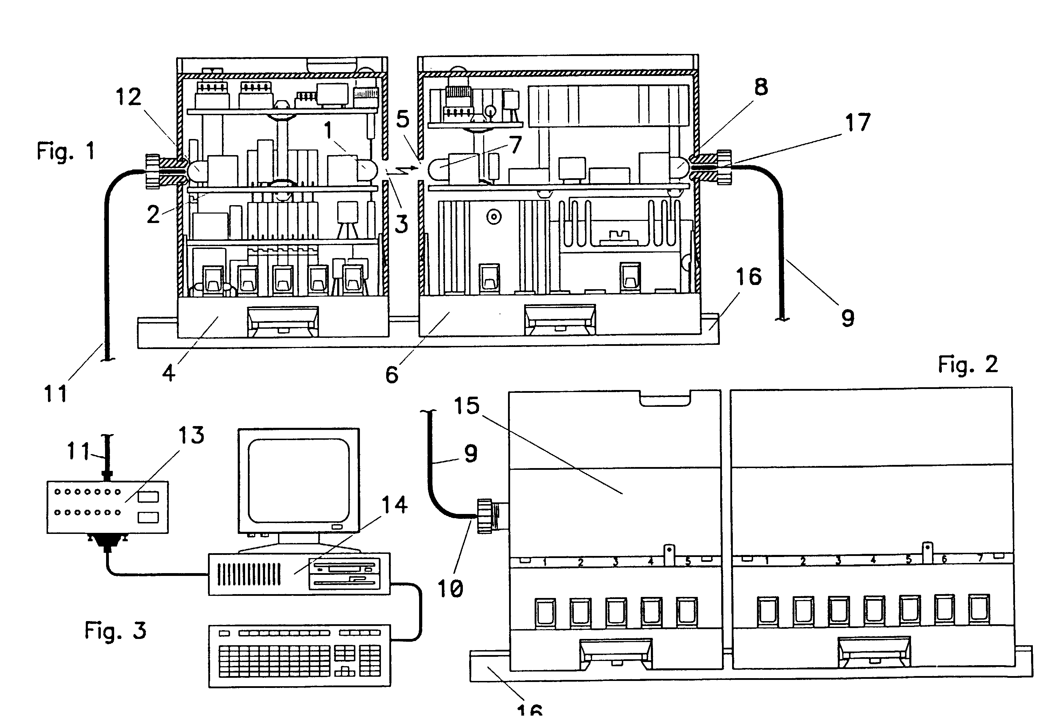

figure 1 is a sectional view of two devices arranged side by side according to a standard method which provides for the coupling of said devices on a standardized metal supporting guide 16;
figure 2 is a view of a chain of devices which are not aligned with the preceding ones; and
figure 3 is a view of an external control device complete with electro-optical interface.

The illustrated system comprises a solid-state lamp 1 which is appropriately supported by a printed circuit board 2; the lamp 1 is appropriately directed toward a hole 3, formed in the wall of the case of the device 4, and a second adjacent hole 5, formed in the wall of the container of the second device 6; the sensor 7 is aligned with said holes 3 and 5. The transmission and reception cells may be constituted by solid-state devices which operate in the infrared range. The holes 3 and 5, formed in the walls of the cases of the devices 4 and 6, can be omitted by using plastic materials which are transparent to infrared rays to build said cases.

The operation of the system according to the invention is as follows. An electronic signal which corresponds to a command is sent to the lamp 1; the lamp emits radiation which passes through the holes 3 and 5, striking the detection device 7, which converts the radiation into a corresponding electric signal which is sent to the electronics provided in the second device 6. The same signal is sent to the solid-state lamp 8, which emits a signal which corresponds to the received signal, making it available to other modules which are cascade-connected. The electrical signals which drive the transmission cells 3 are modulated at high frequencies and a low-pass amplifier is connected to the receiving device 7, so that external artificial or natural light does not affect the operation of the device.

If a device which is also provided with the opto-electronic coupling system described in the present patent cannot be mounted in an aligned manner and proximate to the end of the chain constituted by the other devices, it is possible to recreate optical continuity by inserting a low-cost plastic optical fiber 9, which optically connects the output 8 of the last device 6 to the optical input 10 of the remote and non-aligned one 15. The optical fiber is inserted within the same electrical panel, or, if allowed by the optical losses of the fiber, outside said panel in order to restore the optical connection between the transmitting cell of one module and the receiving cell of the subsequent module. Usually, the command signal for the entire chain is generated by the device 4; however, if the command originates from an external source 14, the connection can be provided by means of an optical fiber 11 which connects the device 4 to a receiving optical-electronic system 12 identical to the ones already described; the other end of the fiber 11 is connected to an appropriate interface 13 which converts into optical signals the electrical signals arriving from the external control device 14. All the connections of the optical fibers occur by means of appropriate ferrules 17 suitable for adaptation and fixing.

The invention thus conceived is susceptible to numerous modifications and variations, all of which are within the scope of the inventive concept; all the details may furthermore be replaced with other technically equivalent ones.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for transmitting electrical signals, suitable to be integrated in electrical devices used in electrical panels for the distribution and control of electric power, characterized in that it comprises a first optical transmitting cell (3) and a second optical receiving cell (7) mounted on parallel opposite sides of each one of a plurality of electrical devices, said electrical devices being each fixed on a standardized guide (16) so that said first and second cells of adjacent electrical devices are mutually aligned, said first transmitting cell (3) being driven by electrical signals, said signals being modulated at high frequency in order to make external artificial or natural lights and noise disturbance irrelevant by means of the connection of a low-pass amplifier inserted with said receiving cell (7).

2. A system according to claim 1, characterized in that said first (3) and second (7) cells are constituted by solid-state devices which operate in the infrared range.

3. A system according to any of the preceding claims, characterized in that the cases of said electrical devices are built in plastic materials which are transparent to infrared rays.

4. A system according to any of the preceding claims, characterized in that a low-cost optical fiber (9) is inserted between the transmitting cell (3) of the last electrical device of a chain constituted by said electrical devices, and the receiving cell (7) of the first electrical device of a further plurality of aligned electrical devices within the same electrical panel, in order to restore optical connection between the transmitting cell of one module and the receiving cell of the subsequent module.

5. Transmission system according to either of claims 1-4, characterized in that a low-cost optical fiber (9) is inserted between the transmitting cell of the last electrical device of a chain constituted by the electrical devices and outside said panel, in order to restore optical connection between the transmitting cell of one electrical device and the receiving cell of a subsequent electrical device.

## Patentansprüche

1. System zum Übertragen elektrischer Signale, das zum Einbau in elektrischen Vorrichtungen geeignet ist, die in elektrischen Schalttafeln zur Verteilung und Steuerung elektrischer Energie verwendet werden, dadurch **gekennzeichnet,** daß es eine erste optische Übertragungszelle (3) und eine zweite optische Empfangszelle (7) enthält, welche auf parallelen, einander gegenüberliegenden Seiten einer Vielzahl elektrischer Vorrichtungen befestigt sind, daß die elektrischen Vorrichtungen jeweils auf einer genormten Führung (16) befestigt sind, so daß die erste und die zweite Zelle benachbarter elektrischer Vorrichtungen aufeinander ausgerichtet sind, und daß die erste Übertragungszelle (3) durch Signale gesteuert wird, welche hochfrequenzmoduliert sind, um künstliches oder natürliches Außenlicht und Störsignale durch einen mit der Empfangszelle (7) eingebauten Tiefpass-Verstärker unwirksam zu machen.

2. System nach Anspruch 1, dadurch **gekennzeichnet,** daß die erste Zelle (3) und die zweite Zelle (7) aus im Infrarotbereich arbeitenden Halbleiterbauelementen bestehen.

3. System nach einem der vorhergehenden Ansprüche, dadurch **gekennzeichnet,** daß die Gehäuse der elektrischen Vorrichtungen aus für Infrarotstrahlen durchlässigen Kunststoffmaterialien gebaut sind.

4. System nach einem der vorhergehenden Ansprüche, dadurch **gekennzeichnet,** daß eine kostengünstige Lichtleitfaser (9) zwischen der Übertragungszelle (3) der letzten elektrischen Vorrichtung einer aus den elektrischen Vorrichtungen bestehenden Kette und der Empfangszelle (7) der ersten elektrischen Vorrichtung einer weiteren Vielzahl aufeinander ausgerichteter elektrischer Vorrichtungen in derselben elektrischen Schalttafel eingebaut ist, um eine optische Verbindung zwischen der Übertragungszelle eines Moduls und der Empfangszelle des darauffolgenden Moduls herzustellen.

5. Übertragungssystem nach einem der Ansprüche 1 bis 4, dadurch **gekennzeichnet,** daß eine kostengünstige Lichtleitfaser (9) zwischen der Übertragungszelle der letzten elektrischen Vorrichtung einer aus den elektrischen Vorrichtungen bestehenden Kette und außerhalb der Schalttafel eingebaut ist, um eine optische Verbindung zwischen der Übertragungszelle einer elektrischen Vorrichtung und der Empfangszelle einer darauffolgenden elektrischen Vorrichtung herzustellen.

## Revendications

1. Système pour transmettre des signaux électriques, approprié pour être intégré dans des dispositifs électriques utilisés dans des panneaux électriques pour la distribution et la commande de la puissance électrique,
caractérisé en ce qu'il comprend une première cellule de transmission optique (3) et une seconde cellule de réception optique (7) montées sur des côtés opposés parallèles de chacun d'une pluralité de dispositifs électriques, lesdits dispositifs électriques étant chacun fixés sur un guide standardisé (16) de façon que lesdites première et seconde cellules de dispositifs électriques adjacents soient mutuellement alignées, ladite première cellule de transmission (3) étant entraînée par des signaux électriques, lesdits signaux étant modulés à haute fréquence de façon à supprimer les effets de la lumière naturelle ou de la lumière artificielle externes et du bruit au moyen de la liaison d'un amplificateur passe-bas inséré dans ladite cellule de réception (7).

2. Système selon la revendication 1,
caractérisé en ce que lesdites première (3) et seconde (7) cellules sont constituées par des dispositifs à l'état solide qui fonctionnent dans le domaine infrarouge.

3. Système selon l'une quelconque des revendications précédentes,
caractérisé en ce que les boîtiers desdits dispositifs électriques sont construits en matières plastiques qui sont transparentes aux rayons infrarouges.

4. Système selon l'une quelconque des revendications précédentes,
caractérisé en ce qu'une fibre optique (9) de faible coût est insérée entre la cellule de transmission (3) du dernier dispositif électrique d'une chaîne, constituée par lesdits dispositifs électriques, et la cellule de réception (7) du premier dispositif électrique d'une autre pluralité de dispositifs électriques alignés à l'intérieur du même panneau électrique, de façon à restaurer la liaison optique entre la cellule de transmission d'un module et la cellule de réception du module suivant.

5. Système de transmission selon l'une des revendications 1-4,
caractérisé en ce qu'une fibre optique (9) de faible coût est insérée entre la cellule de transmission du dernier dispositif électrique d'une chaîne constituée par les dispositifs électriques et l'extérieur dudit panneau, de façon à restaurer le liaison optique entre la cellule de transmission d'un dispositif électrique et la cellule de réception d'un dispositif électrique suivant.
